# NEUE EUROPÄISCHE PATENTSCHRIFT

(11) **EP 3 208 181 B2**
(45) Veröffentlichungstag und Bekanntmachung des Hinweises auf die Entscheidung über den Einspruch: **18.09.2024**
(45) Hinweis auf die Patenterteilung: 24.03.2021
(21) Anmeldenummer: 17155695.4
(22) Anmeldetag: 10.02.2017
(51) Int. Cl.: B62D 55/088

(54) **KETTENLAUFWERK FÜR MILITÄRISCHE FAHRZEUGE**
TRACK DRIVE FOR MILITARY VEHICLES
CHÂSSIS SUR CHENILLE POUR VÉHICULES MILITAIRES

(30) Priorität: 16.02.2016 DE 102016102715
(43) Veröffentlichungstag der Anmeldung: 23.08.2017
(73) Patentinhaber: KNDS Deutschland GmbH & Co. KG, 80997 München (DE)
(72) Erfinder: Schiller, Silvio, 80997 München (DE); Wittmann, Dipl.-Ing. Christoph, 80997 München (DE)
(74) Vertreter: Feder Walter Ebert

(56) Entgegenhaltungen:
- DE-U1- 202011 050 456
- US-A- 2 560 307
- US-A1- 2005 275 287
- US-A1- 2007 170 777
- US-A1- 2010 051 358

## Beschreibung

Die vorliegende Erfindung betrifft ein Kettenlaufwerk, insbesondere für militärische Fahrzeuge, mit einer Fahrzeugkette, welche sich um einen mehrere Laufwerksrollen aufweisenden Laufwerkraum herum erstreckt gemäß dem Oberbegriff des Patentanspruchs 1. Einen weiteren Gegenstand bildet ein Fahrzeug mit einem solchen Kettenlaufwerk.

Die US 2,560,307 A offenbart eine Vorrichtung mit der sich Verschmutzungen von den Laufwerksrollen eines Kettenlaufwerks abkratzen lassen. Der abgekratzte Schmutz wird seitlich aus dem Laufwerksraum heraus gelenkt. Vor allem im militärischen Bereich werden aufgrund deren guter Fahreigenschaften auch in teilweise sehr unwegsamen Gelände häufig kettengetriebene Fahrzeuge eingesetzt, beispielsweise in Form von Kampfpanzern, Schützenpanzern, Amphibienfahrzeugen usw. Die Kettenfahrzeuge weisen hierzu in der Regel auf jeder Fahrzeugseite ein Kettenlaufwerk auf, welches zum Antrieb des Fahrzeugs über eine mit dem Fahrzeugantrieb gekoppelte Fahrzeugkette verfügt. Die Fahrzeugkette erstreckt sich dabei um einen Laufwerksraum herum, in welche verschiedene Laufwerksrollen des Kettenlaufwerks angeordnet sind, wie beispielsweise frei drehbare- oder angetriebene Laufwerksrollen, Umlenkrollen usw.

Bei solchen Kettenfahrzeugen erfolgt insbesondere bei Geländefahrten auf schlammigem, sandigem oder steinigem Untergrund ein Schmutzeintrag in den zur Seite hin offenen Laufwerksraum. Dabei tritt der Schmutz von der Seite her in den Laufwerksraum ein und gelangt von oben her auf die Innenseite der Fahrzeugkette.

Dies kann insbesondere bei aus einzelnen Kettensegmenten bestehenden Ketten, deren einzelne Kettenglieder nur sehr schmale Zwischenräume aufweisen, und insbesondere auch bei Bandketten, die bauartbedingt überhaupt keine Zwischenräume aufweisen sondern durchgängig ausgebildet sind, zu Problemen führen, da der in den Laufwerksraum eingetretene Schmutz nur schlecht wieder aus dem Laufwerksraum austreten kann. Im Fahrbetrieb können sich bei derartigen Fahrzeugketten in ungünstigen Situationen daher Zustände einstellen, in denen der in den Laufwerksraum eingebrachte Schmutz innerhalb des Laufwerksraums längere Zeit zirkuliert. Dies kann zu einem erhöhten Verschleiß und damit einer verminderten Lebensdauer der Laufwerkskomponenten und insbesondere der Laufrollen oder Ketten führen, insbesondere bei solchen Laufrollen oder Bandketten, die umfangsseitig mit einer Gummierung versehen sind.

Aufgabe der vorliegenden Erfindung ist es daher, ein Kettenlaufwerk wie auch ein Fahrzeug mit einem Kettenlaufwerk anzugeben, bei welchen der schmutzbedingte Verschleiß reduziert ist.

Zur **Lösung** dieser Aufgabe wird ein Kettenlaufwerk vorgeschlagen, welches die im Patentanspruch 1 definierten Merkmale aufweist.

Durch den innerhalb des Laufwerksraums angeordneten Schmutzabweiser kann der im Fahrbetrieb innerhalb des Laufwerks zirkulierende Schmutz aus dem Laufwerksraum ausgetragen werden. Der Schmutz zirkuliert nicht ständig innerhalb des Laufwerksraums, sondern wird beim Umlauf der Kette aus diesem ausgetragen. Es ergibt sich ein deutlich reduzierter Verschleiß und damit eine längere Lebensdauer der Laufwerkskomponenten.

Es ist erfindungsgemäß vorgesehen, dass der Schmutzabweiser zumindest teilweise im Überwurfbereich einer hinteren, als Umlenkrolle ausgebildeten Laufwerksrolle angeordnet ist. Das Kettenlaufwerk weist verschiedene Arten von Laufwerksrollen auf, bei denen es sich um Laufrollen, Umlenkrollen, Stützrollen oder Antriebsritzel handeln kann. Im hinteren Bereich ist eine als Umlenkrolle ausgebildete Laufwerksrolle angeordnet, die als eine nach Art eines Antriebsritzels ausgebildete oder als frei drehbar gelagerte Umlenkrolle ausgebildet sein kann. Beim Umlaufen um die Umlenkrolle ändert sich die Ausrichtung der Ketteninnenseite, welche vor der Umlenkrolle mit deren Innenseite nach oben weist und nach Umlaufen über die Umlenkrolle mit deren Innenseite nach unten weist. Im Bereich der Umlenkrolle fällt daher der auf der Innenseite der Kette mitlaufende Schmutz von der Kette ab. Aufgrund der im Fahrbetrieb auftretenden Geschwindigkeiten und der damit auf den Schmutz wirkenden Beschleunigungen fällt dieser nicht senkrecht nach unten, sondern wird über die Umlenkrolle gefördert und dort in einem wurfparabelartigen Überwurfbereich abgeworfen. Vorteilhaft ist, wenn der Schmutzabweiser in diesem Überwurfbereich angeordnet ist und den Schmutz direkt aus dem Überwurfbereich aus dem Laufwerksraum austrägt. Ein längeres Zirkulieren des Schmutzes wird vermieden.

Erfindungsgemäß ist weiterhin vorgesehen, dass der Schmutzabweiser im hinteren Bereich des Laufwerksraums angeordnet ist. Denn entsprechend der Hauptfahrrichtung des Kettenlaufwerks fällt der auf der Innenseite der Fahrzeugkette mitbewegte Schmutz im hinteren Bereich des Kettenlaufwerks von der Fahrzeugkette ab und kann dort direkt aus dieser ausgetragen werden.

Weiterhin ist erfindungsgemäß vorgesehen, dass der Schmutzabweiser in horizontaler Richtung zwischen den Drehachsen der beiden hinteren Laufwerksrollen angeordnet ist. Die hinterste Laufwerksrolle wird üblicherweise gebildet von einer Umlenkrolle und die anderen Laufwerksrolle von einer gefederten, frei drehbar gelagerten Laufrolle. Durch die Anordnung des Schmutzabweisers im Bereich zwischen den Drehachsen der beiden Laufwerksrollen ergibt sich ein zuverlässiger, verschleißvermeidender Austrag von Schmutz aus dem Laufwerksraum.

Erfindungsgemäß ist der Schmutzabweiser oberhalb einer horizontalen Längsmittelebene des Laufwerksraums angeordnet. Auch durch die solche Anordnung des Schmutzabweisers ergibt sich ein zuverlässiger, verschleißvermeidender Austrag von Schmutz aus dem Laufwerksraum.

Erfindungsgemäß ist vorgesehen, dass der Schmutzabweiser als Prallelement, insbesondere als Prallblech, ausgebildet ist. Auf diese Weise kann der durch die im Fahrbetrieb auftretenden Beschleunigungen entlang einer Wurfparabel beschleunigte Schmutz durch Aufprallen auf den als Prallelement ausgebildeten Schmutzabweiser umgelenkt und aus dem Laufwerksraum gefördert werden. Das Prallelement ist erfindungsgemäß gummiert ausgebildet, wodurch sich im Fahrbetrieb eine geringere Geräuschentwicklung durch den auf dem Prallelement aufprallenden Schmutz ergibt.

Erfindungsgemäß weist der Schmutzabweiser eine Prallfläche auf, die derart ausgerichtet ist, dass auf dieser auftretender Schmutz seitlich aus dem Laufwerkraum herausgelenkt wird. In diesem Zusammenhang hat es sich ferner als konstruktiv vorteilhaft erwiesen, wenn die Prallfläche nach laufwerksaußen abschüssig geneigt ausgerichtet ist. Das Prallelement kann als eine Art Leitblech ausgebildet sein, entlang dessen Prallfläche der Schmutz aus dem Laufwerksraum herausgeleitet wird.

Für einen zuverlässigen Austrag von Schmutz aus dem Laufwerksinnenraum hat es sich ferner als vorteilhaft erwiesen, wenn die Prallfläche mit der Innenseite des Laufwerksraumes einen stumpfen Winkel einschließt. Der stumpfe Winkel kann im Bereich von 95° bis 120°, vorteilhafterweise im Bereich von 100° bis 110°, liegen.

Ebenso ist es für einen zuverlässigen Austrag von Schmutz aus dem Laufwerksinnenraum und damit einer verminderten Verschleißanfälligkeit von Vorteil, wenn die Prallfläche mit der Oberseite des Laufwerksraums einen spitzen Winkel einschließt. Dieser Winkel kann insbesondere im Bereich von 20° bis 60°, bevorzugt im Bereich von 25° bis 45°, und noch bevorzugter im Bereich von 30° bis 35° liegen.

Bei einem Fahrzeug, welches ein Kettenlaufwerk mit einem oder mehreren der zuvor genannten Merkmale aufweist, ergeben sich die zuvor genannten Vorteile in analoger Weise.

Weitere Einzelheiten und Vorteile eines erfindungsgemäßen Kettenlaufwerks sollen nachfolgend unter Zuhilfenahme der beigefügten Zeichnungen eines Ausführungsbeispiels erläutert werden. Darin zeigen:
- Fig. 1: in stark schematisierter Form eine seitliche Ansicht eines Kettenlaufwerks,
- Fig. 2: eine vergrößerte Ansicht des hinteren Bereichs eines Kettenlaufwerks und
- Fig. 3: eine Ansicht des hinteren Teils des Kettenlaufwerks aus der in Fig. 2 mit III gekennzeichneten Richtung.

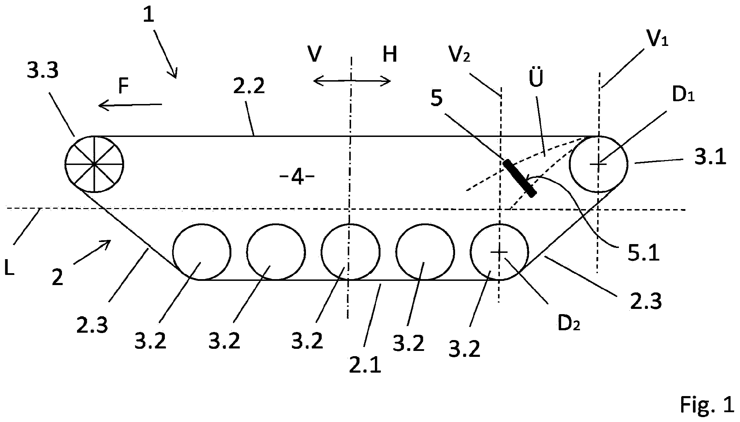

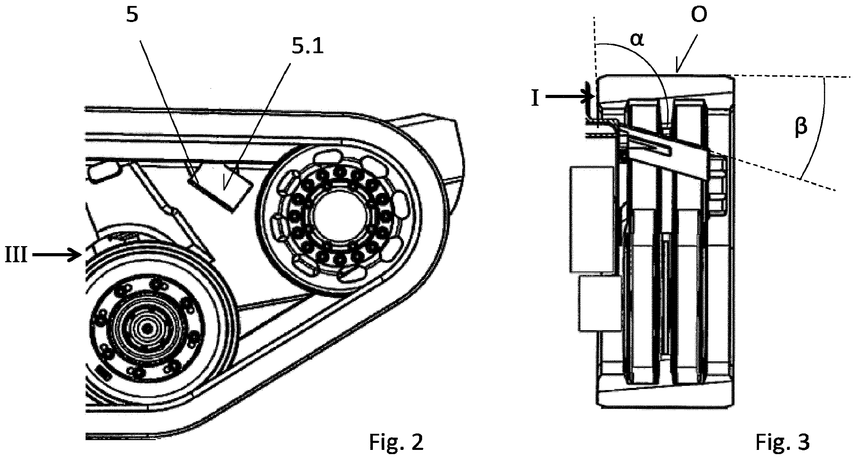

Fig. 1 zeigt in seitlicher und stark schematisierter Ansicht ein Kettenlaufwerk 1, wie dieses insbesondere bei militärischen Fahrzeugen wie etwa Kampf- oder Schützenpanzern, Amphibienfahrzeugen oder sonstigen Fahrzeugen verwendet wird. Das Kettenlaufwerk 1 weist eine umlaufend ausgebildete Fahrzeugkette 2 auf, bei welcher es sich beispielsweise um eine aus Stahl bestehende Kette mit mehreren aneinander gereihten Kettensegmenten oder eine im Wesentlichen aus einem Gummimaterial bestehende, durchgehend ausgebildete Gleiskette handeln kann, wie diese in den Fig. 2 und 3 dargestellt ist.

Die Kette 2 gelangt auf deren Außenseite mit dem Untergrund in Kontakt und erstreckt sich mit deren Innenseite um einen im Wesentlichen trapezförmig ausgebildeten Laufwerksraum 4 mit mehreren Laufrollen 3.1, 3.2, 3.3 herum.

Wie die Darstellung in Fig. 1 erkennen lässt, weist das Kettenlaufwerk eine ganze Reihe frei drehbar gelagerter Laufwerksrollen 3.2 auf, welche im Bereich eines sogenannten Untertrums 2.1 der Fahrzeugkette 2 angeordnet sind. An den sich im Wesentlichen horizontal erstreckenden Untertrum 2 der Fahrzeugkette 2 schließen sich zu beiden Seiten geneigt verlaufende Übergangsbereiche 2.3 an, über welche die Kette hin zu als Umlenkrollen ausgebildeten Laufwerksrollen 3.1, 3.3 geführt ist. Im Bereich zwischen den Umlenkrollen 3.2, 3.3 befindet sich der Obertrum 2.2 der Fahrzeugkette 2, welcher dem Untertrum 2.1 gegenüberliegend ebenfalls eine im Wesentlichen horizontale Ausrichtung hat.

Beim Ausführungsbeispiel ist die im vorderen Bereich V des Kettenfahrzeugs angeordnete Umlenkrolle 3.3 als Antriebsritzel ausgeführt und ist insoweit angetrieben ausgebildet, wohingegen die hintere Umlenkrolle 3.1 nicht angetrieben ausgebildet ist. Es handelt sich daher um ein Kettenfahrzeug mit Frontantrieb. Die Erfindung ist in gleicher Weise jedoch auch bei heckgetriebenen Kettenfahrzeugen anwendbar.

Beim Betrieb des Kettenlaufwerks 1 entlang der Hauptfahrrichtung F, welche der Vorwärtsfahrt des zugehörigen Kettenfahrzeugs entspricht, bewegt sich die Fahrzeugkette 2 unter den frei drehbaren Laufwerksrollen 3.2 hindurch, durchläuft den hinteren Übergangsbereich 2.3 bis hin zu der hinteren Umlenkrolle 3.1. Der vor allem im Bereich der unteren Laufwerksrollen 3.2 an der Innenseite der Fahrzeugkette 2 aufgenommene Schmutz wird dabei mit in Richtung der hinteren Umlenkrolle 3.1 gefördert. Nach Überlaufen der hinteren Umlenkrolle 3.1 ändert sich die Orientierung der Fahrzeugkette 2, welche im Bereich deren Obertrums mit deren Innenseite nach unten weist, bis diese im Bereich der vorderen Umlenkrolle 3.3 schließlich erneut umgelenkt und über den vorderen Übergangsbereich 2.3 erneut in Richtung der unteren Laufwerksrollen 3.2 bewegt wird.

Der im Fahrbetrieb des Kettenlaufwerks 1 insbesondere bei Geländefahrt aufgenommene Schmutz, beispielsweise in Form von Steinen, Ästen, Laub und ähnlichem, wird über die Innenseiten der Fahrzeugkette 2 vor allem im Bereich deren Untertrums 2.1 aufgenommen, über den hinteren Übergangsbereich 2.3 in Richtung der hinteren Umlenkrolle 3.1 mitgenommen und dort nach erfolgter Umlenkung entlang eines Überwurfbereichs Ü ausgeworfen. Der Überwurfbereich Ü ist in Fig. 1 schematisch dargestellt und entspricht einer Art Wurfparabelöffnung, wobei Schmutz bei schneller Fahrt im oberen Bereich und bei langsamerer Fahrt im unteren Bereich des Überwurfbereichs Ü ausgeworfen wird.

In dem Überwurfbereich Ü ist der Schmutzabweiser 5 in Fig. 1 ebenfalls schematisch eingezeichnet. Die Anordnung des Schmutzabweisers 5 ist dabei derart gewählt, dass der entlang des Überwurfbereichs Ü geförderte Schmutz auf dem Schmutzabweiser 5 auftrifft und seitlich aus dem Laufwerksraum heraus gelenkt wird. Ein Zirkulieren des Schmutzes, welches sich dadurch ergeben würde, dass der Schmutz entlang des Überwurfbereichs Ü erneut auf die Oberseite des Untertrums 2.1 der Fahrzeugkette 2 gelangt, wird hierdurch auf diese Weise unterbunden.

Wie auch die Darstellungen in den Fig. 2 und 3 dies erkennen lassen, ist der Schmutzabweiser 5 nach Art eines Prallelements mit einer in Richtung des Überwurfbereichs Ü ausgerichteten Prallfläche 5.1 ausgebildet. Der Schmutzabweiser 5 befindet sich dabei in einer Position oberhalb der Längsmittelebene L des Kettenlaufwerks 1 in dessen hinterem Bereich H. Der Schmutzabweiser 5 ist nahe des Obertrums 2.2 der Fahrzeugkette 2 angeordnet. Der Schmutzabweiser 5 befindet sich in horizontaler Richtung betrachtet im Bereich zwischen der Drehachse D₁ der als Umlenkrolle ausgebildeten hinteren Laufrolle 3.1 und der Drehachse D₂ der benachbarten, frei drehbar gelagerten Laufrolle 3.2 im Bereich des Untertrums 2.1, so dass sich der Schmutzabweiser im Bereich zwischen zwei durch die Drehachsen D₁, D₂ der Laufrollen 3.1, 3.2 verlaufenden Vertikalebenen V₁, V₂ befindet.

Um einen besonders günstigen Schmutzaustrag zu erreichen, ist die Prallfläche 5.1 des Schmutzabweisers 5 nach schräg laufwerksaußen geneigt angeordnet. Wie die Darstellung in Fig. 3 dies erkennen lässt, schließt die Prallfläche 5.1 einen stumpfen Winkel α mit der Innenseite 1 des Kettenlaufwerls 1 ein, der beim Ausführungsbeispiel etwa 100° beträgt. Darüber hinaus schließt die Prallfläche 5.1 mit der Oberseite O des Laufwerkraums 4 einen spitzen Winkel β ein, der beim Ausführungsbeispiel bei etwa 30° liegt.

Aufgrund der Anordnung des Schmutzabweisers 5 nahe des oberen Kettentrums 2.2 im Bereich zwischen den beiden hinteren Laufwerksrollen 3.1, 3.2 ergibt sich ein zuverlässiger Austrag des über die Umlenkrolle 3.1 geförderten Schmutzes im laufenden Fahrbetrieb des Kettenlaufwerks 1. Der in das Kettenlaufwerk 1 eingetragene Schmutz zirkuliert nicht ewig innerhalb des Laufwerksraums 4, sondern wird beim Passieren der hinteren Laufwerksrolle 3.1 kontinuierlich aus dem Laufwerksraum herausbefördert. Hierdurch ergibt sich ein deutlich reduzierter Verschleiß, insbesondere an den Gummiflächen der Laufwerksrollen 3.1, 3.2, 3.3 sowie der Fahrzeugkette 2. Auch reduziert sich die Gefahr eines Ausspurens der Fahrzeugkette 2 durch die bei großem Schmutzeintrag verringerte Führung der Fahrzeugkette 2 auf den Laufwerksrollen 3.1, 3.2, 3.3.

### Bezugszeichen:

- 1: Kettenlaufwerk
- 2: Fahrzeugkette
- 2.1: Untertrum
- 2.2: Obertrum
- 2.3: Übergangsbereich
- 3.1: Laufrolle, Umlenkrolle
- 3.2: Laufrolle, frei drehend
- 3.3: Laufrolle, Antriebsritzel
- 4: Laufwerksraum
- 5: Schmutzabweiser
- 5.1: Prallfläche

- V: vorderer Bereich
- H: hinterer Bereich
- D₁: Drehachse
- D₂: Drehachse
- V₁: vertikale Ebene
- V₂: vertikale Ebene
- L: Längsmittelebene
- Ü: Überwurfbereich
- F: Hauptfahrtrichtung
- I: Innenseite
- O: Oberseite

## Patentansprüche

1. Kettenlaufwerk, insbesondere für militärische Fahrzeuge, mit einer Fahrzeugkette (2), welche sich um einen mehrere Laufwerksrollen (3.1, 3.2, 3.3) aufweisenden Laufwerksraum (4) herum erstreckt, und einem zumindest teilweise innerhalb des Laufwerksraums (4) angeordneten Schmutzabweiser(5) zum Austrag von Schmutz aus dem Laufwerksraum (4), wobei der Schmutzabweiser (5) im hinteren Bereich (H) des Laufwerksraums (4), oberhalb einer horizontalen Längsmittelebene (L) des Laufwerksraums (4) und zumindest teilweise im Überwurfbereich (0) einer hinteren, als Umlenkrolle ausgebildeten Laufwerksrolle (3.1) angeordnet ist und wobei der Schmutzabweiser (5) eine nach schräg laufwerksaußen geneigt angeordnete Prallfläche (5.1) aufweist, die derart ausgerichtet ist, dass auf dieser auftreffender Schmutz seitlich aus dem Laufwerksraum (4) heraus gelenkt wird,
**dadurch gekennzeichnet,**
**dass** der Schmutzabweiser (5) in horizontaler Richtung zwischen den Drehachsen (D1, D2) der beiden hinteren Laufwerksrollen (3) angeordnet ist, wobei der Schmutzabweiser als gummiertes Prallelement ausgestaltet ist.

2. Kettenlaufwerk nach einem der vorhergehenden Ansprüche, **dadurch gekennzeichnet, dass** der Schmutzabweiser (5) als Prallblech ausgebildet ist.

3. Kettenlaufwerk nach einem der vorhergehenden Ansprüche, **dadurch gekennzeichnet, dass** die Prallfläche (5.1) nach laufwerksaußen abschüssig geneigt ausgerichtet ist.

4. Fahrzeug, insbesondere militärisches Fahrzeug, mit mindestens einem Kettenlaufwerk (1) nach einem der Ansprüche 1 bis 3.

## Claims

1. Crawler track, in particular for military vehicles, having a vehicle crawler (2) which extends about a track space (4) comprising multiple track rollers (3.1, 3.2, 3.3) and a dirt guard (5) arranged at least partially within the track space (4) for expelling dirt from the track space (4), wherein the dirt guard (5) is arranged in the rear region (H) of the track space (4), above a horizontal longitudinal median plane (L) of the track space (4) and at least partially in throw-over region (Ü) of a rear track roller (3.1) designed as a deflection roller, and wherein the dirt guard (5) has a deflector surface (5.1) arranged tilted obliquely to the outside of the track which is oriented in such a manner that dirt which encounters said deflector surface is deflected laterally from the track space (4),
**characterized in that**
the dirt guard (5) is arranged in a horizontal direction between the rotational axes (D1, D2) of the two rear track rollers (3), wherein the dirt guard is designed as a rubberized impact element.

2. Crawler track according to one of the preceding claims, **characterized in that** the dirt guard (5) is designed as a deflection plate.

3. Crawler track according to one of the preceding claims, **characterized in that** the deflection surface (5.1) is oriented steeply tilted to the outside of the track.

4. Vehicle, in particular military vehicle, having at least one crawler track (1) according to one of Claims 1 to 3.

## Revendications

1. Mécanisme de roulement à chenille, destiné en particulier à des véhicules militaires, ledit mécanisme comprenant une chenille (2) qui s'étend autour d'un espace de mécanisme de roulement (4) comportant une pluralité de rouleaux de mécanisme de roulement (3.1, 3.2, 3.3), et un déflecteur de boue (5) disposé au moins partiellement dans l'espace de mécanisme de roulement (4) et destiné à enlever la boue de l'espace de mécanisme de roulement (4), le déflecteur de boue (5) étant disposé dans la zone arrière (H) de l'espace de mécanisme de roulement (4), au-dessus d'un plan médian longitudinal horizontal (L) de l'espace de mécanisme de roulement (4) et au moins partiellement dans la zone de recouvrement (Ü) d'un rouleau de mécanisme de roulement arrière (3.1) conçu comme un rouleau de renvoi et le déflecteur de boue (5) comportant une surface de déflection (5.1) qui est disposée de manière inclinée vers l'extérieur du mécanisme de roulement et qui est orientée de façon à dévier la boue, qui vient l'impacter, latéralement de l'espace de mécanisme de roulement (4),
**caractérisé en ce que**
le déflecteur de boue (5) est disposé dans la direction horizontale entre les axes de rotation (D1, D2) des deux rouleaux de mécanisme de roulement arrière (3), le déflecteur de boue étant conçu comme un élément d'impact caoutchouté.

2. Mécanisme de roulement à chenille selon l'une des revendications précédentes, **caractérisé en ce que** le déflecteur de boue (5) est réalisé sous la forme d'une tôle de déflection.

3. Mécanisme de roulement à chenille selon l'une des revendications précédentes, **caractérisé en ce que** la surface de déflection (5.1) forme avec le côté supérieur (O) de l'espace de mécanisme de roulement (4) un angle aigu (B).

4. Véhicule, notamment véhicule militaire, comprenant au moins un mécanisme de roulement à chenille (1) selon l'une des revendications 1 à 3.
